# EUROPEAN PATENT APPLICATION

(11) **EP 0 637 171 A2**
(43) Date of publication of application: **01.02.1995**
(21) Application number: 94111986.9
(22) Date of filing: 01.08.1994
(51) Int. Cl.: H04N 7/087

(54) **System for selecting character information programs for television receiver having teletext function**

(30) Priority: 30.07.1993 JP 189755/93; 30.07.1993 JP 189756/93
(71) Applicant: SANYO ELECTRIC Co., Ltd., Moriguchi-shi, Osaka (JP)
(72) Inventor: Nagata, Tsuyoshi, Daito-shi, Osaka (JP); Terami, Kouji, Higashiosaka-shi, Osaka (JP)
(74) Representative: Glawe, Delfs, Moll & Partner

(57) **Abstract**

A receiver has a controller 4 which comprises a change-over portion 110 for effecting by a manual switching action on a remote-control command 2 a changeover between a mode 1 wherein teletext is presented on a display unit 19 and a mode 2 wherein the display unit resumes the television broadcast or shows various functions of the teletext other than those of the mode 1, a setting portion 111 for setting each of color keys 25 on the command 2, i.e., RED key 21, GREEN key 22, YELLOW key 23 and CYAN key 24, for a specified function corresponding to the changed-over mode and indicating the function of the set color key 25 on the display unit 19 in characters of the same color as the color key 25, and an execution portion 112 for realizing the set function when the color key 25 is depressed. Each of the color keys 25 has a contents display selecting function or page function in the mode 1, or the set specified function other than those of mode 1 in the mode 2, thus performing different functions in the mode 1 and mode 2 to reduce the number of keys on the panel of the command 2. A particular key function on the display unit 19 can be executed by depressing the color key 25 of the same color as the color characters indicating the function on the display unit, hence facilitated manipulation.

## Description

### FIELD OF INDUSTRIAL APPLICATION

The present invention relates to a system for selecting character information programs for use in television receivers having a teletext function.

### BACKGROUND ART

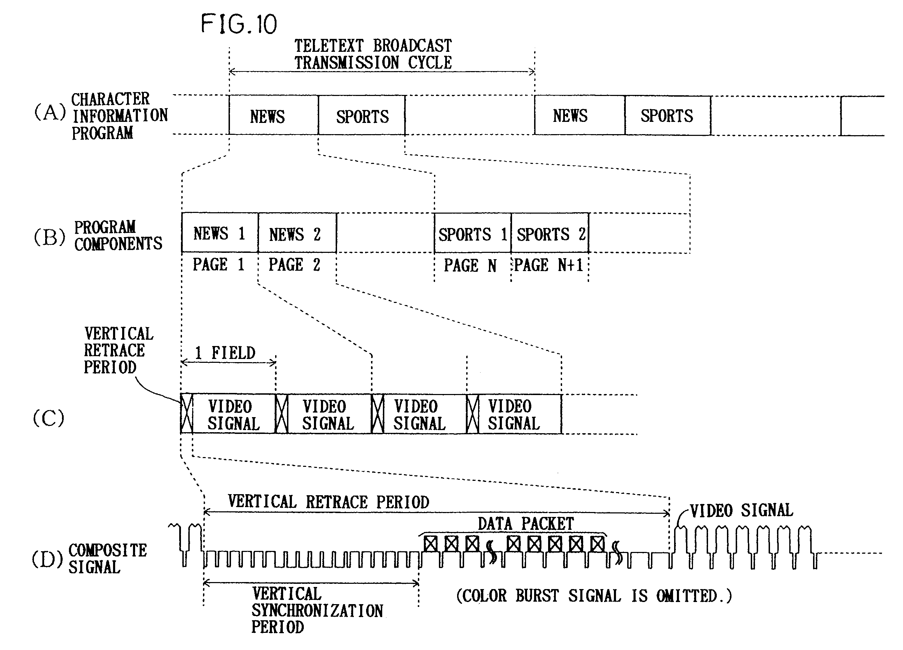

The teletext broadcast is a character broadcast which is practiced mainly in Western Europe. First briefly stated, the teletext broadcast transmits together with conventional television signals a series of character information programs which are repeated cyclically as shown in FIG. 10, (A). From among these character information programs, the desired program is selected by the viewer and presented on the display to provide the required character information.

The program usually comprises a plurality of pages each of which is displayed as a unit on one screen as shown in FIG. 10, (B). Outside the vertical synchronization period within the vertical retrace period of video signals for two fields, the information of each page is transmitted as dispersed in data blocks termed data packets as shown in FIG. 10, (C) and (D). The data packets contain, besides page information, various items of control data, for example, for the FLOF service to be described below (reference: "SPB 492 TELETEXT SPECIFICATION," European Broadcasting Union, published December 1992).

With conventional television receivers (TV sets) having the teletext function, there are two kinds of modes for specifying a particular page presenting the desired character information program; one is a contents display selecting function which is termed FULL-LEVEL-ONE FEATURE (FLOF) or TOP mode, and the other is a mode wherein the number of desired page is directly input (direct input mode).

Hereafter, FLOF mode is referred to among the above-mentioned two modes as the contents display selecting function unless otherwise noticed.

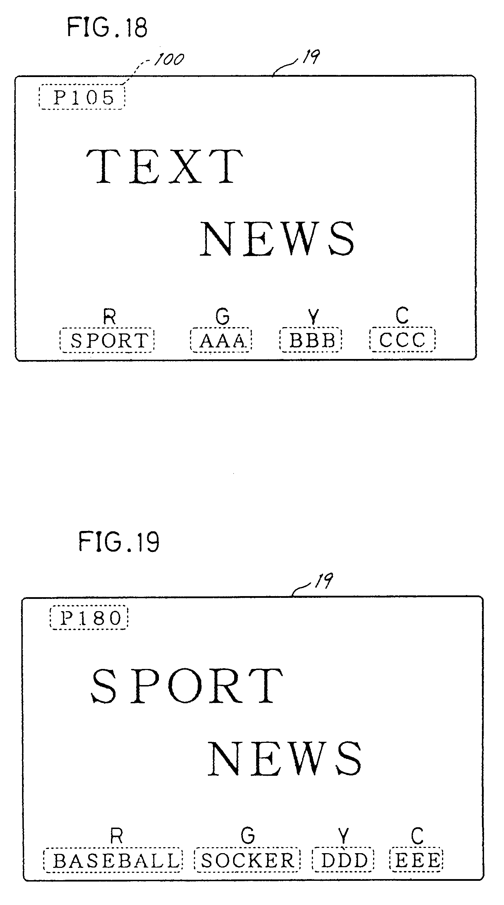

The contents display selection function is a service offered by the broadcasting station for facilitated page selection. When this service is available, the display 19 of the receiver shows, as seen in FIG. 18, a title page 100 as [P105], and the field of teletext broadcast programs [SPORT][AAA][BBB][CCC] in color characters of red, green, yellow and cyan.

In the following description, the characters on the panel of a remote-control command 2 and the characters on the display screen will be expressed as enclosed in brackets [ ].

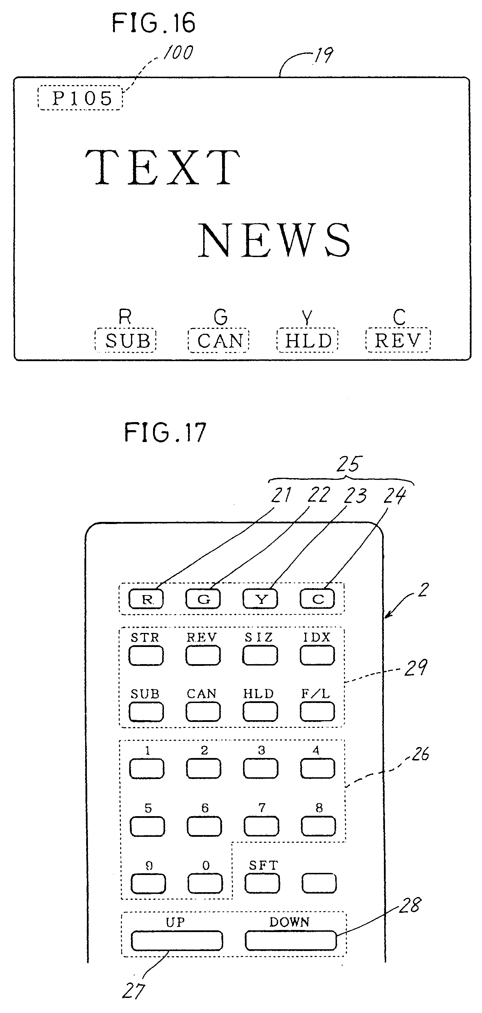

As shown in FIG. 17, on the other hand, the operating remote controller (remote-control command) has arranged thereon a red key [R] 21, green key [G] 22, yellow key [Y] 23 and cyan key [C] 24 which are color keys 25. The viewer selects the desired program by depressing one of the color keys 25 which has the same color as the color of characters indicating the field of that program on the display 19 of the receiver 1. Although the above-mentioned four colors are used by the service and rule as the colors of the color keys 25 and as the program classifying colors on the display 19, the number and colors of keys and programs as classified are of course changeable.

With reference to FIG. 18 showing an example of contents display selection function service, the [R] key 21 on the remote-control command 2 is pressed when [SPORT] in the title page 105 is to be selected. FIG. 19 shows an example of display screen then presented. The title [SPORT] is recorded in page 180, which further shows the names of individual sports, such as [BASEBALL] and [SOCCER], in color characters at the bottom, so that the color key 25 of the same color as the desired sport is to be selected and pushed by the viewer on the remote-control command. The contents display selecting function service is offered by the broadcasting station so that the viewer can select teletext programs easily in this way.

The remote-control command 2 of the conventional television receiver having the teletext function is further provided with the following eight control keys 29 as shown in FIG. 17 for operating the receiver for teletext broadcast. These control keys will be described below.

[F/L] key is an abbreviation of [contents display selecting function/list] key. This key is used for a change-over between the contents display selecting function mode and a list mode, in which a teletext page is stored, and the stored page is shown on the display 19 in color characters and selected by the color key 25.

[IDX] key is an abbreviation for [INDEX] key. This key displays the index of the text.

[SUB] key displays a subpage of text having the subpage.

[REV] key is an abbreviation of [REVEAL] key. This key displays a concealed screen.

[STR] key is an abbreviation for [STORE] key. This key causes a set page to be stored in the list mode.

[CAN] key is an abbreviation of [CANCEL] key. This key is used to view the television broadcast during searching in a text mode.

[SIZ] key is an abbreviation for [SIZE] key. This key displays an upper or lower half as enlarged.

[HLD] key is an abbreviation for [HOLD] key. This key is used to stop a subpage while automatically changing subpages are viewed.

In the direct input mode, the desired page of text is input by using "0" to "9" number keys 26 arranged on the remote-control command 2, or the number of the current page is incremented or decremented by using [UP] key 27 or [DOWN] key 28 as shown in FIG. 17.

As described above, arranged on the panel of the remote-control command 2 are four color keys 25 for selecting programs in the contents display selecting function mode, twelve number keys 26 including [UP] and [DOWN] keys for the direct input mode, and eight control keys 29 relating to the teletext broadcast, i.e., as many as 24 keys in total. Since a sufficient space is not available for indicating the functions of keys, the indications are difficult to recognize, and the keys are difficult to manipulate. Furthermore, difficulties are encountered in rendering the command 2 small-sized and less costly owing to the presence of many keys.

The contents display selecting function service of the teletext broadcast (FLOF) is not offered in every region. For example, this service is available in countries such as England and Spain, whereas it is not available in countries such as Germany and France.

In these regions where the contents display selecting function service (FLOF) is not available but a similar contents display selecting function service (TOP) in a different way is available, teletext page numbers of hundreds, those of tens and those of units are generally made to correspond respectively to major categories, medium categories and minor categories of the teletext information as classified. For example, pages 100 to less than 200 are news programs, pages 110 to less than 120 are news relating to politics, and pages 120 to less than 130 are news relating to economy, while pages 200 to less than 300 are sports programs, pages 210 to less than 220 relate to baseball, and pages 220 to less than 230 relate to soccer.

In the regions where the contents display selection function service is not available, this function with color keys 25 is not usable, so that teletext pages can be set only in the direct input mode, and three-digit numerical values need to be input. This procedure is cumbersome.

Further in the countries where the service is not offered, the color keys 25 arranged on the remote-control command 2, i.e., the red key 21, green key 22, yellow key 23 and cyan key 24, are unnecessary. Accordingly, it has been necessary to prepare two kinds of remote-control commands 2, i.e., commands 2 having the color keys 25 and those having no color keys, far use in the countries where the service is available and for use in the countries where it is unavailable.

Ideally, it is desirable that simple remote-control commands 2 of the same type be usable for the teletext broadcast even if the contents display selecting function service is unavailable and regardless of whether the service is available.

The present invention provides a television receiver having a teletext function which can be changed over by a switching action between a mode 1 wherein color keys 25 are used for performing the contents display selecting function or a page manipulating function approximate to the contents display selecting function to display teletext, and a mode 2 wherein the keys 25 display various functions other than the contents display selecting function, such as displaying subpages and resuming TV broadcasts.

The present invention further provides a television receiver having a teletext function which is easy to operate even when the contents display selecting function service is unavailable and for which a remote-control command is usable commonly in a region where the service is available and also in a region where the service is unavailable by automatically changing over the function of the color key 25.

The receiver 1 of the present invention includes a controller 4 having key processing means 113 which comprises change-over means 110 for changing the function of at least one of [R] key, [G] key, [Y] key, [C] key and [IDX] key for use in a mode 1 or alternatively for use in a mode 2 when the user manipulates a remote-control command for a change-over, setting means 111 for setting the key for a specified function corresponding to the changed-over mode and displaying the function of the set key 25 on a display 19 in characters of the same color as the key, and execution means 112 for realizing the set function when the key 25 is depressed.

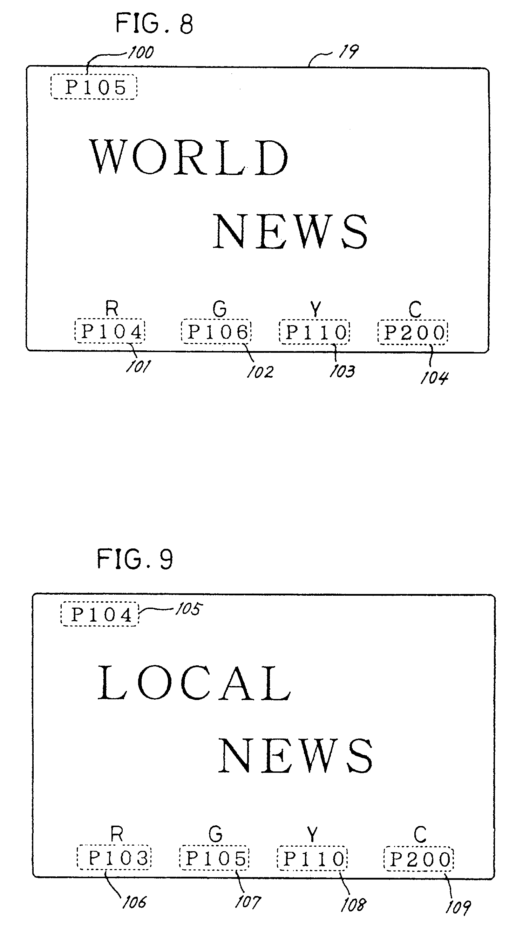

When the contents display selecting function service is offered by the broadcasting station in the mode 1, each color key 25 has the contents display selecting function, and the function is shown on the display in color characters of the same color as the color key (FIG. 8). When the service is not available, each key 25 displays a page which can be displayed, in color characters of the same color as the key (FIG. 8), and [IDX] key has an index function.

In the mode 2, the color keys 25 and the [IDX] key each have the set specified function, and the function of the color key 25 is presented on the display 19 in characters of the same color as the color key (FIG. 16).

With the television receiver having the teletext function and embodying the invention, each of the color keys 25 and [IDX] key is given a double function to perform different functions in the mode 1 and the mode 2. This eliminates from the panel of the remote-control command the keys having the functions to be performed by the keys 25 and [IDX] key in the mode 2, consequently rendering the command 2 smaller in size and less costly.

The functions set for the respective keys 25 are shown on the display 19 in characters of different colors, and the viewer is to depress one of the keys 25 which has the same color as the desired one of the functions on the display 19. This obviates the need for the viewer to see small indications or abbreviations on the remote control command 2 which are difficult to discern.

The controller 4 of the television receiver 1 having the teletext function and embodying the invention further comprises detecting means 6 for detecting presence or absence of a contents display selecting function signal in the broadcast signal, setting means 7 for changing over the functions of color keys 25 including a red key 21, green key 22, yellow key 23 and cyan key 24 in accordance with the result of detection by the detecting means 6 and showing the changed-over functions each in characters of the same color as the corresponding color key on the display 19, and execution means 8 for performing the function of the color key 25 based on the setting by the setting means 7. When the contents display selecting function service is available, the color keys 25 have a contents display selecting function, or when the service is unavailable, the color keys 25, i.e., the red key 21, green key 22, yellow key 23 and cyan key 24, have a function to set pages [P-1], [P+1], [P+10] and [P+100], respectively, wherein [P] is the current teletext page and showing the page setting function on the display 19.

The detecting means 6 automatically detects whether the broadcast signal has the contents display selecting function service. When the result of detection by the detecting means 6 indicates that the broadcast signal has the service, the setting means 7 sets the contents display selecting function for the color keys 25, i.e., the red key 21, green key 22, yellow key 23 and cyan key 24 as in the prior art.

When the service is not available, the setting means 7 gives the color keys 25 the function of [P-1], [P+1], [P+10] and [P+100] wherein [P] is the current teletext page and shows the pages by the function of [P-1], [P+1], [P+10] and [P+100] on the display 19. Since [P] is the current page previously set, [P-1] means setting the page one page before the current page, [P+1] setting the page one page ahead of the current page, [P+10] setting the page 10 pages ahead of the current page, and [P+100] setting the page 100 pages ahead of the current page.

In the region where the contents display selecting function service is available, the function of the color keys 25 can be used according to the invention as in the prior art. Additionally, in the region where the service is not offered, the function of setting the respective pages [P-1], [P+1], [P+10] and [P+100] is usable as the function of the color keys 25. Accordingly, in the region where classified teletext information is related to teletext pages although the contents display selecting function service is unavailable, the function of [P-1], [P+1], [P+10] and [P+100] affords a function resembling the contents display selecting function service.

Since remote-control commands of the same kind are usable in the region where the contents display selecting function service is available and also in the region where the service is unavailable, this assures an advantage in manufacturing cost.

The pages to be set by [Y] key 23 and [C] key 24 need not always be in the unit of 10 pages or 100 pages but may be in the unit of a plurality of pages.

### BRIEF DESCRIPTION OF THE DRAWINGS

FIG. 1 is a block diagram showing the overall construction of a television receiver having a teletext function and embodying the invention;
FIG. 2 is a block diagram of a controller;
FIG. 3 is a block diagram of a teletext decoder IC,
FIG. 4 is a flow chart of a main routine;
FIG. 5 is a flow chart of the process to be executed by detecting means;
FIG. 6 is a flow chart of the process to be executed by setting means;
FIG. 7 is a flow chart of the process to be conducted by execution means;
FIG. 8 is an example of display on the screen of the receiver of the invention when the contents display selecting function service is unavailable;
FIG. 9 is an example of display when the screen of FIG. 8 is subjected a page return procedure;
FIG. 10 is a diagram illustrating signals of a teletext broadcast;
FIG. 11 is a panel diagram of a remote-control command;
FIG. 12 is a flow chart of a key process routine;
FIG. 13 is a flow chart of the process to be conducted by change-over means;
FIG. 14 is a flow chart of the process to be conducted by setting means;
FIGS. 15A and B are continuing flow charts of the process to be conducted by execution means;
FIG. 16 is a display screen on a receiver of the invention in a mode 2;
FIG. 17 is a panel diagram of a remote-control command of a conventional receiver;
FIG. 18 is an example of display screen on the receiver when the contents display selecting function service is offered; and
FIG. 19 is an example of display screen on the receiver when SPORT on the screen of FIG. 18 is selected.

### FIRST EMBODIMENT

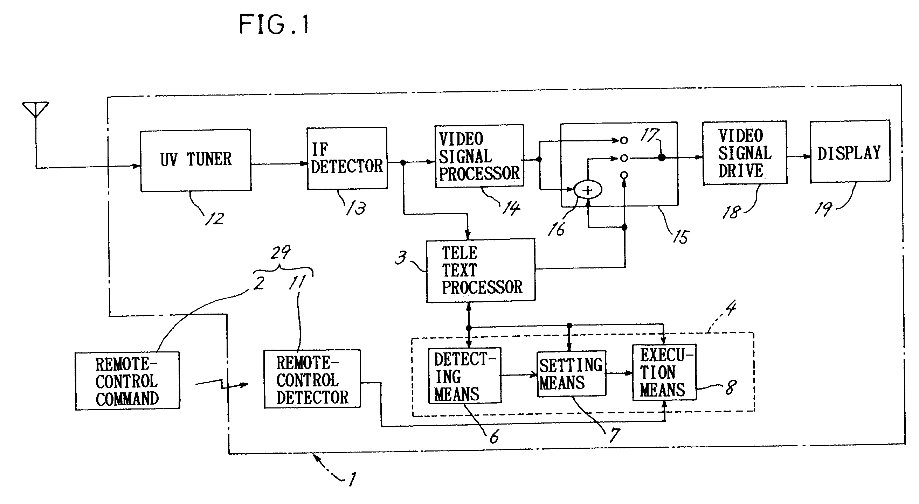

With reference to FIG. 1 showing a receiver of the present invention, a UV tuner 12 receives a television broadcast containing a teletext signal and converts the received signal to a signal of intermediate frequency, which is then delivered to an IF detector 13. The detector 13 amplifies the signal of intermediate frequency, followed by detection, and feeds the resulting signal to a video signal processor 14 and a teletext processor 3.

The video signal processor 14 converts the video signal of the detection output to specified red, green and blue signals (RGB signals) and feeds these signals to a terminal of a superimposition-change-over unit 15.

On the other hand, the teletext processor 3 extracts required character information from the detection output, converts the information to RGB signals in conformity with the video signal and feeds these signals to another terminal of the superimposition-change-over unit 15. The unit 15 superimposes the outputs from the video signal processor 14 and the teletext processor 3 with a match in timing, selects the video signal and the character information signal from television, or a composite signal of these signals as required and delivers the selected output to a video signal drive unit 18. The unit 18 amplifies the selected video signal to drive the display 19 and show images on the display 19.

Operating means 29 comprises a remote-control command 2 and a remote-control detector 11 shown in FIG. 1. The command 2 transmits an operating signal, for example, for page setting, and the detector 11 receives the signal and delivers the signal to a controller 4. The foregoing components other than the controller 4 are known and are the same as in the prior art.

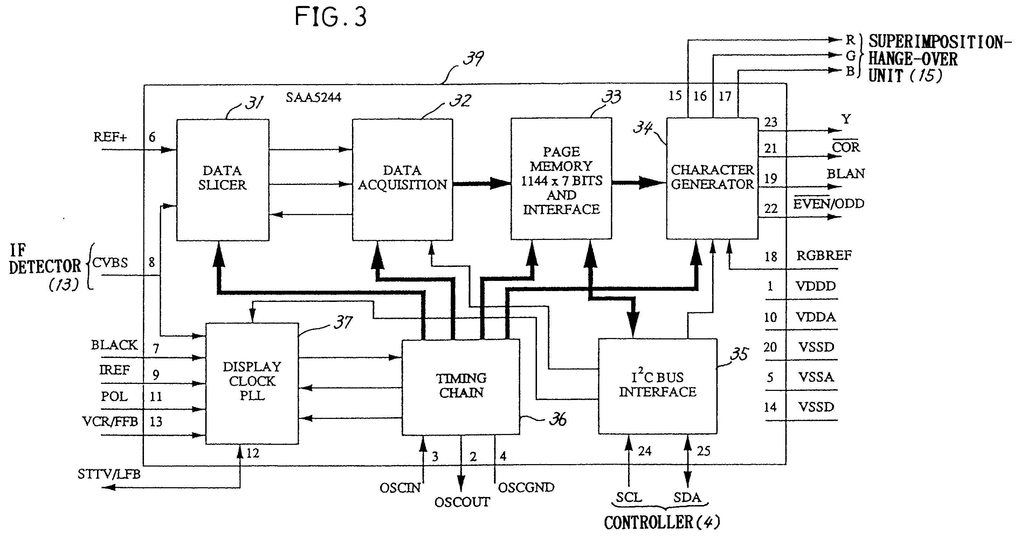

FIG. 3 shows a known teletext decoder IC 39 (SAA5244A, product of Philips) serving as the teletext processor 3. The decoder IC 39 receives at CVBS terminal the composite signal containing character information and output from the IF detector 13. The signal is wave-shaped by a data slicer 31. Data acquisition 32 extracts a required page signal from character information programs repeatedly delivered cyclically. The page signal is stored in a page memory 33 and then read out using a synchronizing signal output from a timing chain 36 and timed with the input composite signal. A character generator 34 delivers RGB signals as converted from a row of bits corresponding to characters read out from the page memory 33. Through SDA and SCL terminals of I²C bus interface 35, the external controller 4 sets the page to be read out and outputs control data signal required for operating the teletext decoder IC 39.

With the present embodiment, the detection output from the IF detector 13 is applied to the CVBS terminal, and the SDA and SCL terminals are connected to the controller 4 for page setting and transfer of data such as delivery of result of setting. On the other hand, RGB terminals are connected to the superimposition-change-over unit 15 to output the RGB signals of character information of the specified page.

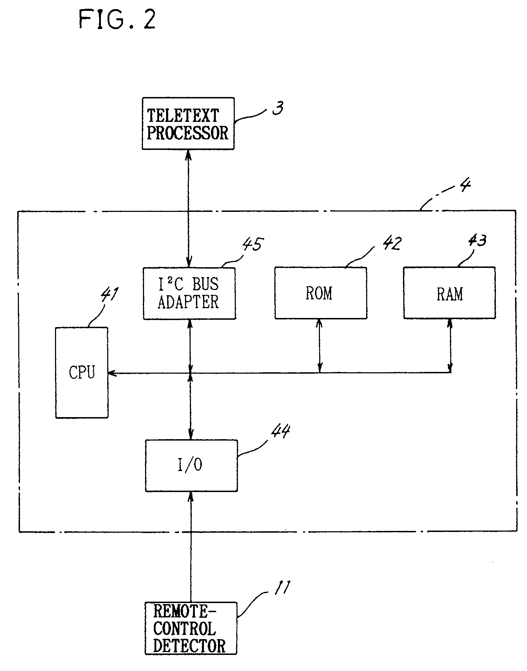

As shown in FIG. 2, the controller 4 of the present embodiment comprises a CPU 41, ROM 42, RAM 43, I/O 44 for receiving the input from the remote-control detector 11 and I²C bus adapter 45 providing an interface for the teletext processor 3. The detecting means 6, setting means 7 and execution means 8 are accommodated in the ROM 42.

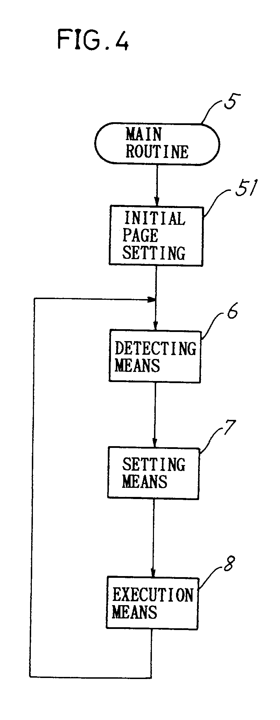

With reference to FIG. 4, the detecting means 6, setting means 7 and execution means 8 are incorporated in a main routine 5. First in [initial page setting] 51, the page specified for opening the teletext broadcast is set in a page register in the data acquisition 32 of the teletext processor 3, whereby the specified page 100 is presented on the display 19. Next, the detecting means 6 checks whether the contents display selecting function service on the specified page is available as will be described in detail later. The setting means 7 shows on the display 19 the functions of the color keys 25 corresponding to the case wherein the service is available or to the case wherein the service is not available, based on the result of checking by the detecting means 6, and holds the pages to be executed when the color keys 25 are depressed. When one of the color keys 25 on the command 2 is pressed, the execution means 8 performs the function of the pressed color key 25 as selected from among the functions of the keys 25 set by the setting means 7.

The detecing means 6, setting means 7 and execution means 8 will be described below in detail.

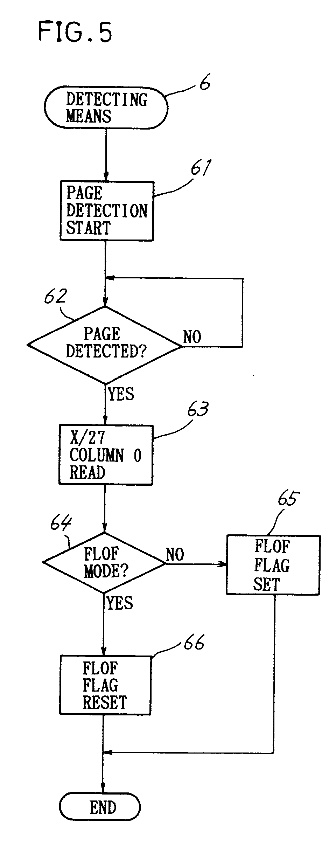

With reference to FIG. 5, the detecting means 6 checks in [page detection start] 61 and [page detected?] 62 whether the page has already been set by the execution means 8 or in [initial page setting] 51. Upon detection of completion of page setting, [X/27 column 0 read] 63 cheks column 0 of packet X/27 containing data as to whether the contents display selecting function (hereinafter referred to as "FLOF") service is rendered. If FLOF service rendered is detected in [FLOF mode?] 64, an FLOF flag is set as at 66. If otherwise, the FLOF flag is reset as indicated at 65, whereby the process to be executed by the detecting means 6 is completed.

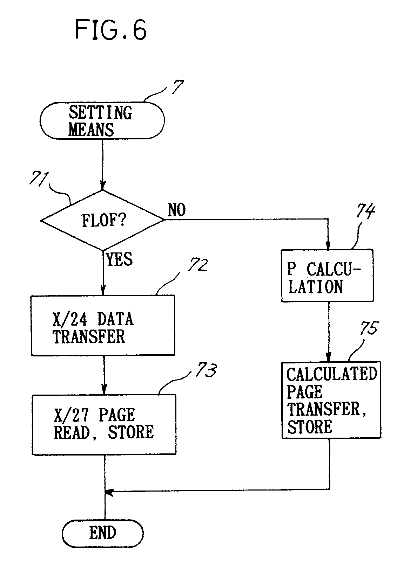

With reference to FIG. 6, the setting means 7 checks the FLOF flag in [FLOF?] 71 and judges whether the FLOF service is available. If the check result is affirmative, the data of packet X/24 containing a message of the title page showing the FLOF in service is transferred in [X/24 data transfer] 72 to the page memory 33 of the teletext processor 3 (FIG. 3), whereby the classification of programs for which the FLOF service is rendered is presented on the display 19. Further in [X/27 page read, store] 73, packet X/27 containing the page data as to the programs for which the FLOF service is available is read and stored, whereby the process when the FLOF service is available is completed.

When the FLOF service is not available, on the other hand, [P calculation] 74 calculates [P-1], [P+1], [P+10] and [P+100].

With the present embodiment, the range of decrease and increases of [P-1], [P+1], [P+10], [P+100] is a loop of [N00] to [N99] (N is 1 to 8), and the number in the digit position to be increased or decreased is calculated, with the number(s) in the lower digit position(s) reduced to zero. Examples are given below.

[P-1] is the current teletext page P minus 1 page. For example, when the current page P is [210], [200] or [299], [P-1] is [209], [299] or [298] respectively.

[P+1] is one page ahead of the current teletext page P. For example, when the current page P is [210], [200] or [299], [P+1] is [211], [201] or [200], respectively. [P+10] is ten pages ahead of the current teletext page P. Since the number in the tens position is to be increased or decreased, the number in the unit position is reduced to zero. For example, if the current page P is [215], [205] or [299], [P+10] is [220], [210] or [200], respectively.

[P+100] is 100 pages ahead of the current teletect page P. Since the numbers in the unit and tens positions are each reduced to zero, for example, when the current page P is [215], [299] or [899], [P+100] is [300], [300] or [100].

The result of calculation is transferred to a predetermined page of the page memory 33 of the teletext processor 3 in [calculated page transfer, store] 75, is thereby shown on the display 19, and is stored in the RAM 43 (see FIGS. 1 and 2) so that when one of the color keys 25 is depressed in the process to be executed by the execution means 8, the page corresponding to the key 25 can be read out. With this step, the process by the execution means 8 comes to an end.

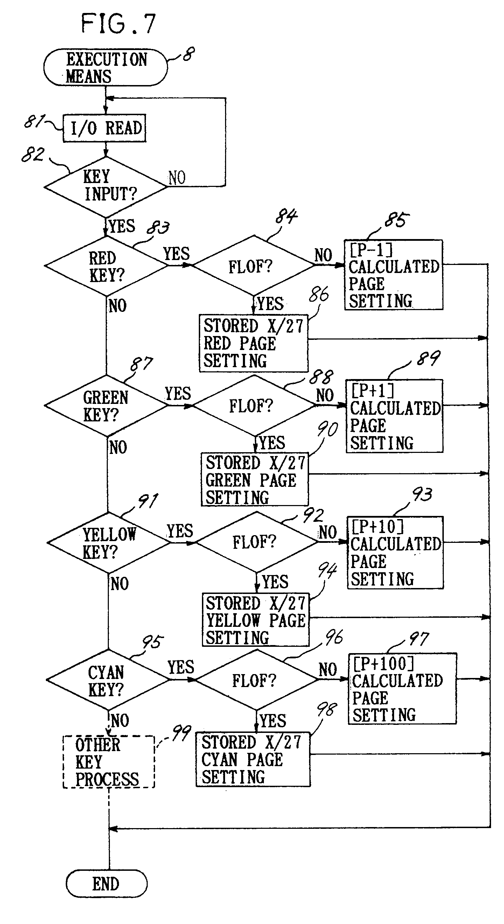

With reference to FIG. 7, the execution means 8 waits for a key input from the remote-control detector 11 in [I/O read] 81 and [key input?] 82. The pressed color key 25 is identified in [red key?] 83, [green key?] 87, [yellow key?] 91 and [cyan key?]. Since all the color keys 25 are alike in the procedure following the depression of the key, the procedure to be executed when [R] key 21 is depressed will be described as a typical example.

When the depressed key is found to be the red key in [red key?] 83, an inquiry is made in [FLOF?] 84 as to whether the FLOF service is available. If the answer is in the affirmative, [stored X/27 red page setting] 86 follows, in which the page of program of [R] key is read from the RAM 43, as extracted from the page data as to the programs for which the FLOF service is rendered, the page data having been read from the packet X/27 and stored in the memory by the teletext decoder IC 39 in the preceding process of the setting means 7. Further in the step 86, the read page data as to [R] key is transferred to the page register in the data acquisition 32 of the IC 39, whereby the program of [R] key is presented on the display 19. With this step, the process of the execution means 8 when the FLOF service is available terminates.

On the other hand, when the FLOF service is not available, [[P-1] calculated page setting] 85 follows, in which page data corresponding to the function of [R] key 21, i.e., showing the result of calculation of [P-1], is read from the calculation result page data stored by the setting means 7 previously, and is set in the page register in the data acquisition 32 of the teletext processor 3, whereby the character information of the page data is presented on the display screen. With this step, the process of the execution means 8 when the FLOF service is not rendered comes to an end.

After the completion of the process of the execution means 8, the above operation is repeated for another page newly set.

When the FLOF service is available, the screen of the invention provides the same displays as in the prior art. FIG. 8 shows an example of display on the screen when this service is not available. The illustrated indication [P105] 100 is the currently received page P. The red indication [P104] 101 is a page obtained by calculating [P-1] for the current page P. The green indication [P106] 102, yellow indication [P110] 103 and cyan indication [P200] 104 are the indications of pages obtained by calculating [P+1], [P+10] and [P+100], respectively.

FIG. 9 shows a display given when [R] key 21 on the remote-control command 2 is pressed with the above display on the screen. The current page P is now [P104] 105, and the color indications resulting from the calculations [P-1], [P+1], [P+10] and [P+100] are [P103] 106, [P105] 117, [P110] 108 and [P200] 109. The third digit can be changed greatly by manipulating [C] key 24, and optional intermediate pages are selectable by [Y] key 23 and keys 22, 21, hence quick changes of pages.

Thus, merely by pressing the color keys 25 on the command 2, a teletext broadcast page of the same color as the pressed key can be presented on the display 19 even when the FLOF service is not offered.

### SECOND EMBODIMENT

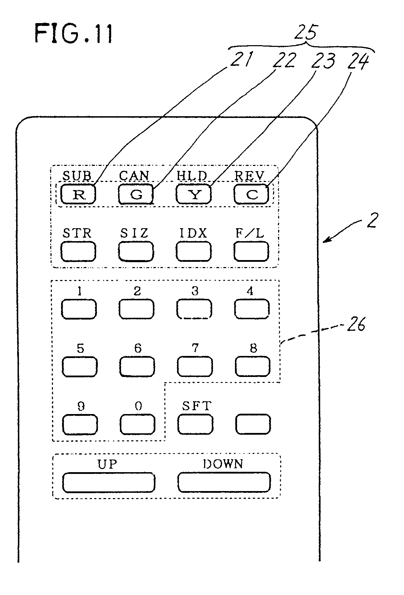

With reference to FIG. 11, [R] key 21, [G] key 22, [Y] key 23 and [C] key 24 are given the FLOF function according to this embodiment as in the first embodiment when the FLOF service is available, and these keys are automatically given a page manipulating function in the region where the service is unavailable. Further when a mode 2 is set upon a change-over, the color keys 25 are given the functions of [SUB] key, [CAN] key, [HLD] key and [REV] key, respectively. [SFT] key is used as a mode change switch.

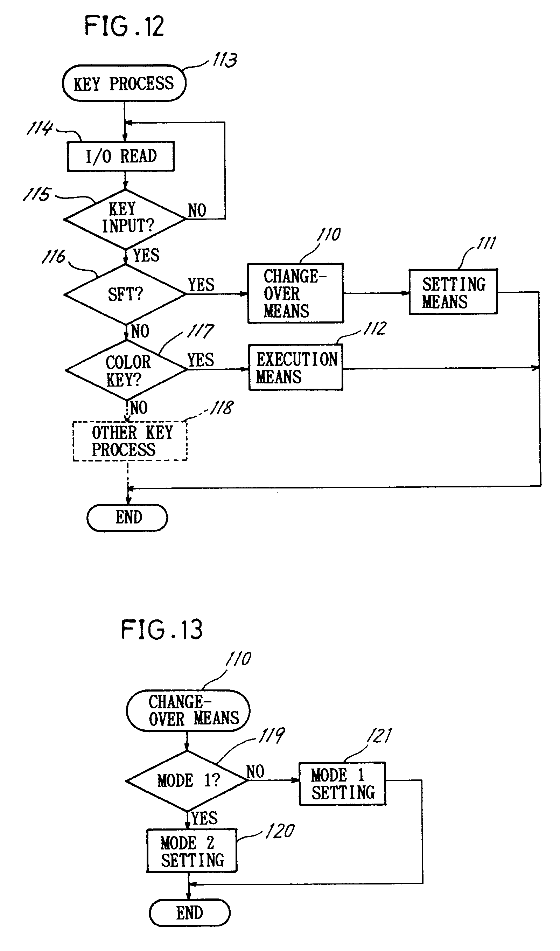

The controller 4 includes change-over means 110, setting means 111 and execution means 112 which are incorporated in a key process routine 113 as shown in FIG. 12. First in this routine 113, [I/O read] 114 and [key?] 115 wait for a key input from the remote-control command 2 via the remote-control detector 11 and I/O 44. When a key input is given, the key data fed through I/O 44 is checked in [SFT?] 116 and [color key?] 117 to inquire whether the depressed key is [SFT] key or color key 25 for identification.

When the input is from [SFT] key, the change-over means 110 to be described blow changes the mode. Subsequently, the setting means 111 sets the specified functions for the color keys 25 and shows the set functions on the display 19. When the input key is found to be a color key 25 in [color key?] 117, the function of the particular color key set by the means 111 previously is performed by the execution means 112.

The change-over means 110, setting means 111 and execution means 112 will be described below in detail.

As shown in FIG. 13, the change-over means 110 recognizes the preceding mode with reference to the mode flag in [mode 1?] 119. When the preceding mode is mode 1, the mode flag is set to mode 2 in [mode 2 setting] 120. If the preceding mode is mode 2, the mode flag is set to mode 1 in [mode 1 setting] 121, whereon the process of the change-over means 110 comes to an end.

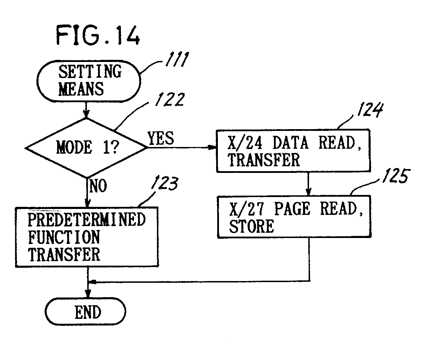

As shown in FIG. 14, the setting means 111 recognizes the mode newly set by the change-over means 110 with reference to the mode flag. When the current mode newly set is mode 1, [X/24 data read] 124 follows, in which the teletext decoder IC 39 serving as the teletext processor 3 operates to transfer the program message of FLOF service of the current received page from specified packet X/24 to a predetermined address of the page memory 33 and thereby show the function of the color keys 25 in mode 1 on the display 19. Further in [X/27 page read] 125, the page of programs provided by the FLOF service is retrieved from the specified packet X/27 by way of the teletext decoder IC 39 and stored in the RAM 42.

In mode 2, on the other hand, [predetermined function transfer] 123 follows, in which the predetermined functions of the color keys 25 in mode 2 are written to a specified address of the page memory 33 in the teletext decoder IC 39 to thereby show the functions of the color keys 25 in mode 2 on the display 19. FIG. 16 shows the display screen at this time.

Thus, the process of the setting means 111 comes to an end.

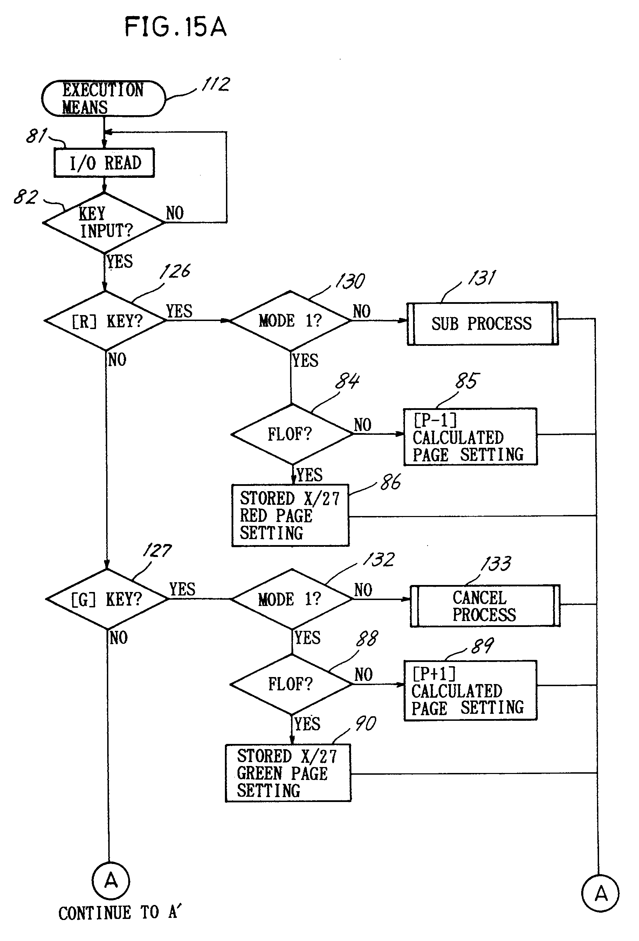

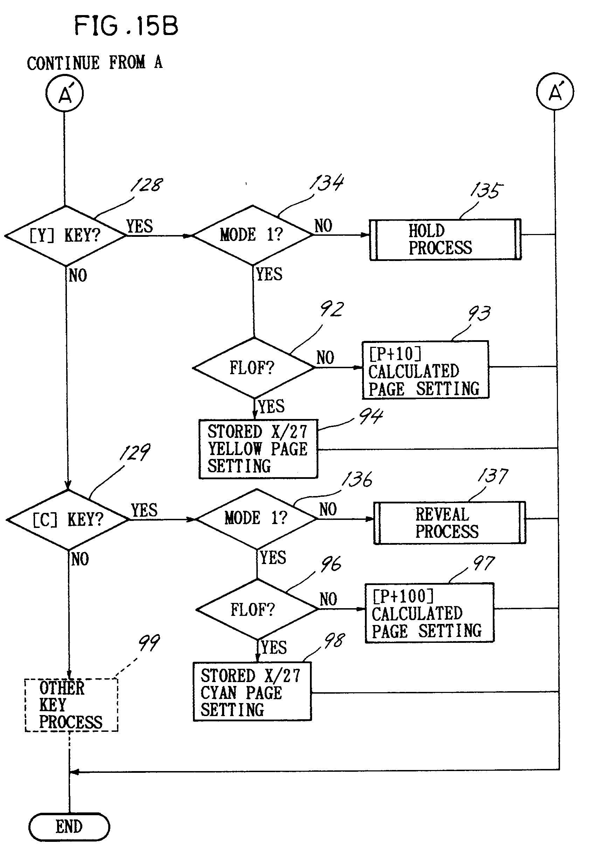

When one of the color keys 25 is pressed as shown in FIGS. 15A, B, the execution means 112 identifies the pressed key 25 in [[R] key?] 126, [[G] key?] 127, [[Y] key?] 128 and [[C] key?] 129, and executes a process for the key. Since the color keys 25 are alike in the process to follow, the process will be described for the case where [R] key is depressed as a typical example.

When the depressed key is found to be [R] key in [[R] key?] 126, the mode currently set is identified in [mode 1?] 130. If the current mode is found to be mode 1, the execution means 112, like the execution means 8 of the first embodiment, checks whether the FLOF service is available, followed by [X/27 red page setting] 86 when the service is available, or by [[P-1] calculated page setting] 85 when the service is unavailable. The result is shown on the display 19, whereby the process of the execution means 112 is completed. The same process as above is repeated for the other color keys 25 in mode 1.

When the current mode is found to be mode 2 in [mode 1?] 130, a subpage process, which is the function of [R] key in mode 2,is executed in [SUB process] 131. [SUB process] 131 is the same as the process routine of the conventional independent [SUB] key.

When the current mode is found to be mode 2 for the other keys, i.e., [G] key, [Y] key and [C] key, [CANCEL process] 133, [HOLD process] 135 and [REVEAL process] 137 follow which are each the same as the conventional corresponding process routine to perform the functions set in mode 2.

In the present embodiment, the function of [IDX]key is not changed over with a change in mode, whereas exactly the same process as in the case of the color keys 25 can be executed for this key except that its function is not shown on the display 19 and that the function thereof in mode 1 is an index function.

The foregoing description of embodiments is intended to illustrate the present invention and should not be interpreted as limiting the invention as defined in the appended claims or reducing the scope thereof. The system of the invention is not limited to the above embodiments in construction but can of course be modified variously within the technical scope set forth in the claims.

## Claims

1. In a television receiver having a teletext function comprising a video signal processor 14 for converting to predetermined signals a video signal in a received signal of a television broadcast containing a teletext signal, a teletext processor 3 for separating the teletext signal from the received signal and outputting information as to a specified page, a change-over unit 15 for effecting a change-over between the outputs from the video signal processor 14 and the teletext processor 3 or superimposing the outputs, a display unit 19 for displaying a video signal output from the change-over unit 15, and operating means 29 comprising a remote-control command 2 and a remote-control detector 11 in the receiver 1 for giving a setting input for a screen display, the operating means 29 further having color keys 25 including setting keys 21, 22, 23, 24 which are different from one another in color to execute a contents display selecting function service and show the function of each of the color keys 25 on the display unit 19, a system for selecting character information programs characterized in that the receiver comprises a controller 4 having change-over means 110 for effecting by a manual switching action on the remote-control command 2 a change-over between a mode 1 wherein teletext is shown on the display unit 19 and a mode 2 wherein the display unit 19 resumes the TV broadcast or shows various functions of the teletext other than the mode 1, setting means 111 for setting each of the color keys 25 for a specified function corresponding to the changed-over mode and indicating the function of the set color key 25 on the display unit 19 in characters of the same color as the color key, and execution means 112 for realizing the set function when the color key 25 is depressed, each of the color keys 25 having a contents display selecting function or page function in the mode 1, and the set specified function other than the said function of mode 1 in the mode 2.

2. A system as defined in claim 1 wherein the controller 4 of the receiver 1 comprises detecting means 6 for detecting presence or absence of a contents display selecting function signal in the broadcast signal, setting means 7 for automatically changing over the function of each of the color keys 25 of the operating means 29 in accordance with the result of detection by the detecting means 6 and indicating the changed-over function in characters of the same color as the color key on the display unit 19, and execution means 8 for performing the function of the color key 25 set by the setting means 7 upon a setting action on the operating means 29, the setting means 7 being operable, upon the detecting means 6 recognizing that no contents display selecting function service is available, to give the setting key 21 among the setting keys 21 to 24 serving as the color keys 25 a function of showing a page one page before the current page, give another one of the setting keys, 22, a function of showing a page one page ahead of the current page, give the other setting keys 23, 24 a function of showing pages respectively different larger numbers of pages ahead of the current page, and indicate on the display unit 19 the pages to be shown.
